# EUROPÄISCHE PATENTSCHRIFT

(11) **EP 1 656 396 B1**
(45) Veröffentlichungstag und Bekanntmachung des Hinweises auf die Patenterteilung: **23.09.2009**
(21) Anmeldenummer: 04740931.3
(22) Anmeldetag: 12.07.2004
(51) Int. Cl.: C08F 6/10, B01D 1/06, F28F 1/00, F28F 1/04, F28F 13/08

(54) **VERFAHREN UND VORRICHTUNG ZUR ENTFERNUNG VON FLÜCHTIGEN SUBSTANZEN AUS HOCHVISKOSEN MEDIEN**
METHOD AND DEVICE FOR THE ELIMINATION OF VOLATILE SUBSTANCES FROM HIGH-VISCOUS MEDIA
PROCEDE ET DISPOSITIF POUR ELIMINER DES SUBSTANCES VOLATILES CONTENUES DANS DES MILIEUX A VISCOSITE ELEVEE

(30) Priorität: 24.07.2003 DE 10333577
(43) Veröffentlichungstag der Anmeldung: 17.05.2006
(73) Patentinhaber: Bayer MaterialScience AG, 51368 Leverkusen (DE)
(72) Erfinder: KOHLGRÜBER, Klemens, 51515 Kürten (DE)
(86) Internationale Anmeldenummer: PCT/EP2004/007678
(87) Internationale Veröffentlichungsnummer: WO 2005/014667

(56) Entgegenhaltungen:
- EP-A- 0 352 727
- EP-A- 0 359 432
- EP-A- 0 772 017
- WO-A-01/39856
- WO-A1-99/54017
- FR-A- 1 119 126
- US-A- 5 785 808

## Beschreibung

Die Erfindung betrifft ein kontinuierliches Verfahren zum besonders schonenden Erwärmen oder Eindampfen von Polymerlösungen oder Polymerschmelzen insbesondere thermoplastischer Polymere unter Verwendung eines Rohrbündelwärmeübertragers bestehend aus Kompaktrohren mit flachen Kanälen und über der Länge veränderlichem Querschnitt und einem nachgeschalteten Abscheider sowie eine Vorrichtung zur Durchführung dieses Verfahrens.

Die in der Technik beschriebenen Rohrbündelwärmeübertrager werden zum Erwärmen oder Abkühlen von Fluiden und zum Verdampfen von flüchtigen Substanzen aus viskosen Medien eingesetzt. Sie bestehen üblicherweise aus Rohren mit kreisrundem Querschnitt, durch welche das zu entgasende oder zu erwärmende Medium strömt und welche auf ihrer Außenseite von einem Heizmedium umströmt werden. Anwendungsgebiete von Rohrbündelwärmeübertragem sind z.B. Eindampfanlagen für Polymere, Klimaanlagen oder Kühlschränke.

Für einige spezielle Anwendungsfälle wurden Rohre mit nichtkreisförmigem Querschnitt beschrieben. So ist in der EP 0 772 017 A1 ein Wärmetauscherrohr für die Verwendung in Rohrbündelwärmeübertragern vorzugsweise in Brennwert-Heizkesseln zur Abkühlung von Heizgasen beschrieben. Das Rohr hat an seinen Enden einen etwa kreisförmigen und im dazwischen liegenden Rohrteil einen ovalen oder rechteckigen Querschnitt, welcher konstant oder variabel ausgeführt sein kann. Die Rohrinnenseite ist mit Sicken, Riefen oder Einprägungen versehen, um eine turbulente Grenzschicht zu erzeugen und den Wärmeübergang zu verbessern. Die Erzeugung einer turbulenten Strömung mit Hilfe von Einprägungen etc. funktioniert bei den laminar strömenden hochviskosen Polymerschmelzen allerdings nicht.

Der in EP 0218104 A1 beschriebene Rohrbündel-Wärmetausch-Apparat arbeitet im Niederdruckbereich nach dem Kreuzgegenstromprinzip und wird für Gas/Gas- und Flüssig-Systeme eingesetzt, insbesondere für Verbrennungsprozesse mit großen Gasmengen und hohen Abgastemperaturen und für Prozesse, in denen Lösungsmittel zirkuliert. Der Apparat besteht aus Rohren, welche an ihren Enden ein Sechskantquerschnittsprofil besitzen und im Mittelteil (ca. 90 % der Rohrlänge) einen elliptischen oder runden Querschnitt. Vorteil des Sechskantprofils ist es, dass die Rohrenden direkt aneinander gefügt werden können und somit zwischen den Rohren ein dichter Hohlraum entsteht, ohne dass vorgelochte Endböden erforderlich sind. Nachteilig wirkt sich diese Konstruktion jedoch beim Anschluss der Seitenwände des Wärmetauschermantels an die zusammengefügten Rohre aus. Es müssen vorgestanzte Bleche angeschweißt werden, welche die Kontur der aneinander gefügten Rohre abbilden.

Der in DE 3 212 727 A1 beschriebene Wärmeaustauscher zum Kühlen oder Erwärmen von hochviskosen, insbesondere strukturviskosen fließfähigen Substanzen besteht aus Reihen von parallelen Rohren, die um 90° versetzt in zueinander parallelen Ebenen angeordnet sind. In den Rohren fließt das Heiz- bzw. Kühlmedium und auf ihrer Außenseite senkrecht zur Ebene der Rohrreihen das zu erwärmende oder zu kühlende Fluid. Die Rohre sind als Rund- oder Flachrohre ausgebildet. Nachteilig wirkt sich bei dieser Anordnung aus, dass zwischen den sich kreuzenden Rohren viele "Toträume" existieren, in denen sich das zu erwärmende bzw. abzukühlende Medium ansammelt und thermisch zersetzt. Außerdem ist diese Konstruktion sehr aufwändig und schwierig auf größere Produktionsanlagen skalierbar.

Aus einem Prospekt der Fa. Schrader Verfahrenstechnik GmbH ist ein Flachrohr-Wärmeaustauscher bekannt. Dieser Flachrohr-Wärmeaustauscher wird zur Kondensation von Dämpfen oder als Heizkörper in Eindampfanlagen eingesetzt. Bei dem beschriebenen Apparat handelt es sich um einen Rohrbündelwärmeübertrager, welcher aus einem Wärmeaustauschermantel besteht, in dem sich in Reihen angeordnete Flachrohre befinden. Als Vorteile werden ein im Vergleich zu runden Rohren verbesserter Wärmeübergang und geringeres Foulingverhalten genannt.

Eine Anwendung auf Polymere oder Polymerschmelze ist nicht bekannt.

Im Stand der Technik sind Wärmetauscherrohre mit flachem, ovalem oder elliptischem Querschnitt bzw. deren Herstellung beschrieben. Die DE 805 785 A1 z.B. offenbart einen Plattenheizkörper, welcher einen nahezu rechteckigen Querschnitt besitzt. Der Plattenheizkörper wird allerdings durch Umbiegen der beiden Seiten eines Bleches und Einschweißen von weiteren Blechstreifen und Versteifungsprofilen gefertigt. Diese Vorrichtung wird in der DE 2 506 434 A1 als Basis genommen, wobei das Wärmetauscherrohr aus einem einzigen Blechstreifen durch Umbiegen gefertigt wird und ein Stützflansch integriert ist. Die überlappenden Enden werden anschließend verschweißt. Ein ähnliches Flachrohr wird in der DE 19 857 510 beschrieben, jedoch besteht der Stützflansch hier aus einem Rand des Blechstreifens, der von der Oberfläche des Rohres zum Rohrinnen und wieder zurück gebogen ist, so dass zwei Kammern entstehen. In der Schrift DE 7 837 359 wird ein flaches Wärmeaustauscherrohr beschrieben, welches im Gegensatz zu den o.g. eine über die gesamte Einsatzzeit des Rohres feste und flüssigkeitsdichte Verbindung im Überlappungsbereich gewährleistet.

Nachteilig wirkt sich bei allen genannten Bauformen die aufwändige Herstellung der Rohre aus, wobei mindestens ein Umform- und ein Fügevorgang notwendig sind. Aufgabe der Erfmdung ist es, ein Kompaktrohr zu verwenden, bei dem lediglich ein Umformvorgang erforderlich ist. Darüber hinaus soll auf die Fügenaht verzichtet werden, welche zu ungünstigen Veränderungen der Schmelzeströmung führen kann.

Der Erfindung liegt die Aufgabe zu Grunde, flüchtige Stoffe aus hochviskosen Polymerlösungen unter besonders schonenden Bedingungen zu entfernen, d.h. bei möglichst niedriger Temperaturbelastung (Temperatur und Verweilzeit) und enger Verweilzeitverteilung und eine geeignete Vorrichtung bereit zu stellen, die die Nachteile der bekannten Wärmetauscher nicht aufweist.

Die Aufgabe wird erfindungsgemäß dadurch gelöst, dass die Polymerlösung kontinuierlich durch einen Rohrbündelwärmeübertrager bestehend aus Kompaktrohren hindurch geleitet und dabei auf eine Temperatur oberhalb der Siedetemperatur der flüchtigen Stoffe erhitzt wird. Die flüchtigen Stoffe werden anschließend in einem nachgeschalteten Abscheider (Entgasungskammer) von der Polymerschmelze abgetrennt und die entgaste Polymerschmelze durch eine Austragsvorrichtung, z.B. eine Zahnradpumpe, weitergefördert (z.B. zur Granulierung).

Gegenstand der Erfindung ist eine Verdampfervorrichtung zur Behandlung viskoser Medien bestehend wenigstens aus einer Zuleitungskammer mit Lochboden, einem daran angeschlossenen Rohrbündelwärmetauscher mit parallel zueinander angeordneten Rohren und einer gelochten Decke (unterer Lochboden) und einer an diesen anschließenden Entgasungskammer mit einer Austragseinheit für das Produkt und einem Brüdenabzug für die Entfernung flüchtiger Bestandteile, wobei der Rohrbündelwärmetauscher durch den Lochboden der Zuleitungskammer und die Lochdecke der Entgasungskammer begrenzt ist, dadurch gekennzeichnet, dass die Rohre des Wärmetauschers auf einen Teil ihrer Längsausdehnung insbesondere auf dem größten Teil ihrer Längsausdehnung einen rechteckförmigen oder elliptischen Querschnitt aufweisen.

Der Begriff rechteckförmiger Querschnitt im Sinne der Erfindung schließt rechteckige Querschnitte mit rechtwinkligen und abgerundeten Kantenformen ein, sowie das sogenannte Langrund, d.h. zwei parallele gerade Seiten werden durch Kreisbögen miteinander verbunden. Bevorzugt wird die Ausbildung des Querschnitts als Langrund, als rechteckige Querschnitte mit abgerundeten Kanten oder eleptische Querschnitte, besonders bevorzugt als Langrund.

Die Rohre des Wärmetauschers weisen bevorzugt auf 70 bis 98 % ihrer Längsausdehnung einen rechteckförmigen oder elliptischen Querschnitt auf.

Die maximale Dicke D (d.h. die Ausdehnung des Rohrquerschnitts längs der kurzen Achse des Querschnitts) des Rohrinneren beträgt bevorzugt im Bereich des rechteckförmigen oder elliptischen Querschnitts 1 bis 50 mm, insbesondere bevorzugt 1 bis 20 mm.

Das Verhältnis von maximaler Breite B zu maximaler Dicke D beträgt insbesondere 2:1 bis 30:1, besonders bevorzugt 4:1 bis 10:1.

Die Rohre haben vorzugsweise eine Länge von 100 mm bis 10 m, bevorzugt von 200 mm bis 3 m, besonders bevorzugt von 500 mm bis 1 m.

Die Rohre haben in einer bevorzugten Ausführung eine Wandstärke von 0,5 bis 5 mm, bevorzugt von 1 bis 4 mm.

Die Rohre können z.B. durch Umformen aus Rohren mit kreisförmigen Querschnitt erhalten werden, beispielweise durch Walzen oder Pressen.

Besonders bevorzugt sind an den Enden der Rohre des Wärmetauschers in der Entgasungskammer vertikale Drähte, Ketten, Drahtschlaufen oder Drahtgeflecht angebracht.

Dieser dienen als Mittel zur Vergrößerung der Phasengrenzfläche zwischen zum Beispiel zu entgasendem Polymer und dem Gasraum, um Ausdampfprozesse zu beschleunigen.

Geeignete Anordnungen von Drähten, Drahtschlaufen oder Drahtgeflechten sind beispielsweise aus der DE 10 144 233 A1 bekannt, deren Inhalt als Referenz hiermit einbezogen wird.

Scharfen Kanten (Ecken) mit möglichen toten Ecken für das Produkt werden bei der Erfindung vermieden. Die Gefahr der Ungleichverteilung des Produktflusses ist in einem elliptischen Rohr geringer als in einem flachen Rohr.

An den Rohrenden kann das Rohr normal kreisrund ausgebildet sein, wodurch eine übliche Befestigung in den Platten eines Rohrbündelwärmetauschers möglich ist. Weiterhin sind dann Produkteintritt und -austritt wie üblich gestaltbar. Der Übergang vom runden auf elliptischen bzw. rechteckförmigen Querschnitt erfolgt bevorzugt ohne scharfe Kanten.

In einer besonders bevorzugten Variante der Erfindung kann das Rohr mehrere Zonen mit unterschiedlicher Querschnittsfläche aufweisen. Die Abflachung kann in zwei oder mehr Stufen erfolgen.

Es ist ferner möglich, zusätzliche Blenden im Bereich des Rohrendes einzubringen, die den Druck im Rohrinneren am Ende der Rohre auf gleichem Niveau halten sollen. Dieses verhindert das ungleichmäßige Ausdampfverhalten in den nebeneinander angeordneten Verdampferrohren. Daraus erfolgt die Verhinderung der Maldistribution.

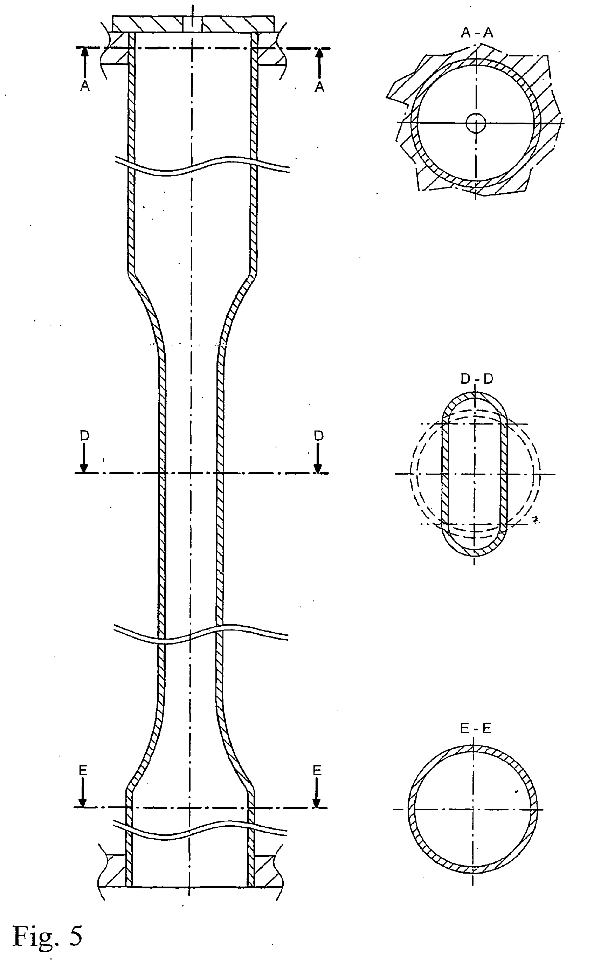

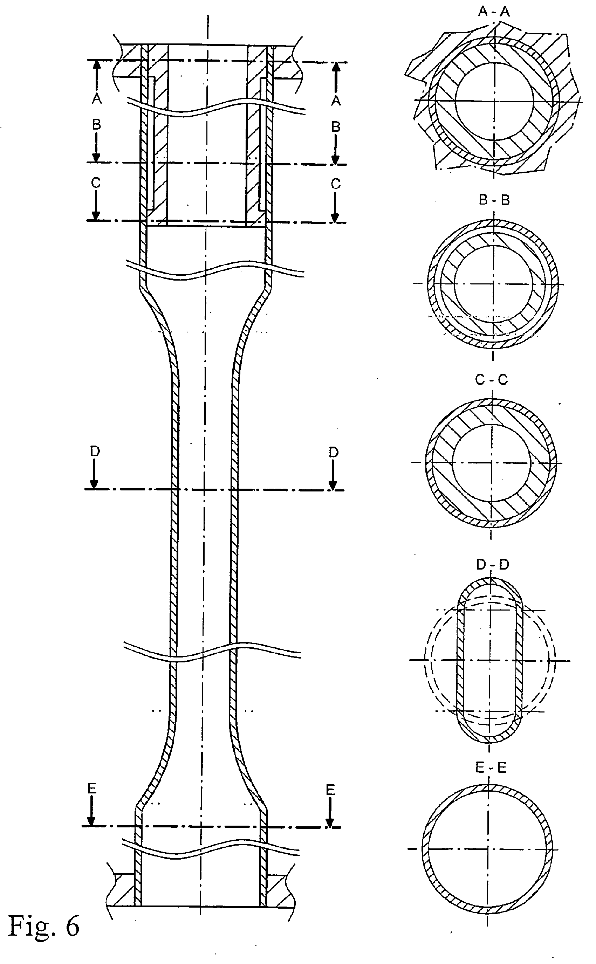

Bevorzugt ist auch eine Variante der Vorrichtung bei der im oberen Eingangsbereich der Rohre (8) eine Querschnittsverengung vorgesehen ist, die insbesondere auf höchstens der Hälfte, bevorzugt höchstens einem Drittel, besonders bevorzugt höchstens einem Viertel der Länge des Rohres (8) und insbesondere auf mindestens zwei Hundertstel, bevorzugt mindestens einem Hundertstel, besonders bevorzugt mindestens einem fünfzigstel der Länge des Rohres (8) ausgedehnt ist (s. z.B. Fig. 5).

Besonders bevorzugt ist eine Vorrichtung, die dadurch gekennzeichnet ist, dass die Länge der Querschnittsverengung mindestens ihrem inneren Durchmesser entspricht, insbesondere bevorzugt mindestens doppelt so lang ist.

Gegenüber Blenden wird ein sprunghafter Abfall des Druckes und plötzliches Verdampfen von eventuellem Lösungsmittel verhindert. Der vergleichsweise höhere Durchmesser gegenüber Blendenanordnungen verhindert die Verstopfungsgefahr im Bereich der Verengung.

Die weiteren Vorteile einer solchen Anordnung bestehen darin, dass ein verbesserter Vordruck in der Zuführungskammer einstellbar ist und damit eine gleichmäßige Verteilung der Polymeren auf die verschiedenen Wärmeaustauscherrohre möglich wird.

Ganz besonders bevorzugt ist eine Vorrichtung der genannten Art, die dadurch gekennzeichnet ist, dass die Querschnittsverengung durch eine Einsteckhülse in den Rohren ausgebildet ist.

Es ist von Vorteil gegebenenfalls den schlechteren Wärmeübergang zwischen einer solchen Einsteckhülse im Eingangsbereich der Rohre zu nutzen, um die Temperaturdifferenz zwischen eintretendem Produktstrom und der Hülseninnenwand kleiner zu halten als die Temperaturdifferenz die sich beim Betrieb der Vorrichtung ohne Einsteckhülse ergibt. Dieser Effekt lässt sich dadurch verstärken, dass ein Material mit vergleichbar geringerer Wärmeleitfähigkeit für die Einsteckhülse verwendet wird als für die Rohre oder dass zwischen Wärmetauscherrohr und Einsteckhülse ein offener Spalt belassen wird, oder dadurch, dass die Wandstärke der Einsteckhülse vergrößert wird.

Gegenstand der erfindungsgemäßen Erfindung ist auch die Verwendung der erfindungsgemäßen Verdampfervorrichtung zur Entfernung flüchtiger Bestandteile aus Polymerlösungen oder -schmelzen.

Weiterer Gegenstand der Erfindung ist ein Verfahren zur Verdampfung flüchtiger Bestandteile aus Polymerlösungen oder -schmelzen unter Verwendung einer erfindungsgemäßen Verdampfervorrichtung, mit den Schritten Vorerhitzen des Polymeren auf eine Temperatur von 150 bis 250°C, bevorzugt von 160 bis 240°C, Einleiten des Polymeren in die Zuleitungskammer bei einem Druck von 2000 bis 100000 hPa, bevorzugt von 5000 bis 50000 hPa, Durchleiten des Polymeren durch das Rohrbündel des Wärmetauschers unter Beheizung der Rohre, bevorzugt mit einem Wärmetauschermedium im Gegenstrom zum Polymeren auf eine Temperatur von 160 bis 380°C, bevorzugt von 165 bis 300°C und Verdampfen und Entfernen der flüchtigen Verbindungen im Bereich der Entgasungskammer und ggf. zusätzlich im unteren Abschnitt der Rohre bei einem Druck in der Entgasungskammer von 1 bis 5000 hPa, bevorzugt von 2 bis 2500 hPa, besonders bevorzugt von 5 bis 1000 hPa sowie Sammeln und Austragen des Polymeren.

Ein bevorzugtes Verfahren ist dadurch gekennzeichnet, dass das Verdampfen und Entfernen der flüchtigen Verbindungen zusätzlich im unteren Viertel, insbesondere im unteren Achtel der Rohre erfolgt.

Bevorzugt beträgt die Viskosität des Polymermaterials bei Eintritt in die Zuleitungskammer 100 mPa·s bis 10⁷ Pa.s, bevorzugt 500 mPa·s bis 10⁶ Pa·s, besonders bevorzugt 1 Pa·s bis 10⁵ Pa.s beträgt.

Insbesondere beträgt der Durchsatz an Polymermaterial bezogen auf ein einzelnes Rohr 0,5 bis 12 kg/h, bevorzugt 1 bis 9 kg/h.

Die Entgasung kann ein- oder mehrstufig ausgeführt werden, wobei im letzteren Fall mehrere Rohrwärmeübertrager hintereinander geschaltet oder mit anderen Entgasungsapparaten kombiniert werden können.

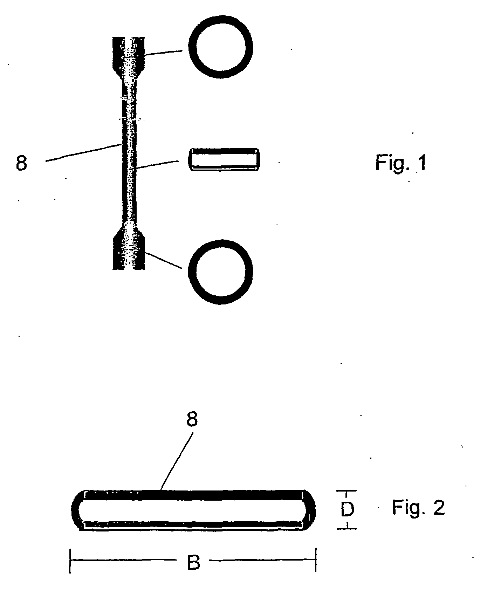

Die Rohre des Rohrbündelwärmeübertragers werden z.B. aus runden Rohren gefertigt, welche mit Hilfe eines geeigneten Werkzeuges, z.B. einer Walze, in die in Fig. 1 dargestellte Form gebracht werden. Die Rohre besitzen einen sich über die Länge ändernden Querschnitt. Die beiden Enden haben den insbesondere ursprünglichen runden Querschnitt des Ausgangsrohres, welches z.B. einen Durchmesser im Bereich von 6 mm bis 450 mm hat, vorzugsweise von 6 mm bis 50 mm, insbesondere von 10 mm bis 40 mm. Dadurch ist die Befestigung in konventionellen Lochböden mit den üblichen automatisierten Schweißverfahren möglich. Der Querschnitt im mittleren Bereich der Rohre entspricht in etwa dem eines flachen Rechteckkanals mit runden oder elliptischen Seitenwänden (vgl. Fig. 2). Die Flachrohre besitzen keine Verbindungsnaht, da sie aus einem Stück gefertigt werden.

Vorzugsweise wird das erfindungsgemäße Verfahren zum Erwärmen oder zur Entgasung von thermoplastischen Polymeren als Schmelze oder Lösung eingesetzt. Diese Polymere umfassen alle Kunststoffe, die unter dem Einfluss von Druck und Temperatur fließfähig werden. Beispielhaft seien hier Polycarbonat, Polyamid, Polypropylen, Polyethylen, Polyester, Polystyrol, hydriertes Polystyrol, Polyurethan, Polyacrylat, Polymethylmethacrylat, Poly(Styrol-Acrylnitril), Poly(Acrylnitril-Butadien-Styrol) und ihre Copolymere oder gegebenenfalls Mischungen der Polymere genannt. Bei den zu entgasenden Substanzen und flüchtigen Verbindungen handelt es sich um alle mit den o.g. Polymeren sinnvoll kombinierbaren Lösemittel bzw. deren Monomere oder niedermolekulare Oligomere, beispielsweise um Chlorbenzol, Methylenchlorid, Bisphenol-A, Caprolactam, Styrol, Acrylnitril, Toluol, Ethylbenzol und Cyclohexan.

Bei der Verwendung des Rohrwärmeübertragers als Verdampfer tritt das Stoffgemisch einphasig in das Rohrbündel ein. Über ein Druckgefälle in den Rohren wird eine Verdampfung ermöglicht und das Stoffgemisch tritt am Ende des Apparates als Gas/Flüssig-Gemisch in den Abscheidebehälter (Entgasungskammer) ein, wo die flüchtigen Verbindungen als Gas abgezogen werden. Die entgaste Schmelze wird z.B. über eine Pumpe zur nächsten Entgasungsstufe oder eine Granuliervorrichtung weiterbefördert.

Bei der Verwendung des Kompaktrohrwärmeübertragers als reiner Wärmeübertrager wird die Rohrbeheizung so eingestellt, dass die Produkttemperatur des in den Rohren strömenden Stoffgemisches unterhalb der Siedetemperatur des am niedrigsten siedenden flüchtigen Stoffes bei dem vorliegenden Druck bleibt.

Das Wärmeträgermedium hat z.B. eine Temperatur zwischen 50°C_{,} und 350°C. Die exakte Heiztemperatur hängt von der zu erwärmenden oder einzudampfenden Polymerlösung und dem erwünschten Eindampfergebnis bzw. der gewünschten Produkttemperatur ab.

Der sich über der Rohrlänge einstellende Druckverlust beträgt maximal 100 000 hPa.

Als Material für die Verdampfervorrichtung sind Edelstähle, Nickelbasislegierungen, Titan, Aluminium und andere Legierungen geeignet. Vorzugsweise werden eisenarme Edelstähle eingesetzt.

Das erfindungsgemäße Verfahren dient dazu, flüchtige Stoffe wie Lösemittel und Monomere aus einer Polymerlösung zu entfernen oder die Polymerlösung zu erwärmen, wobei es sich im Vergleich zum Stand der Technik durch folgende Vorteile auszeichnet:
- einen besseren Wärmeübergang im Rohrwärmeübertrager zwischen Wärmeträgermedium und Produkt aufgrund des größeren Oberflächen/Volumen-Verhältnisses der flachen Kompaktrohre im Vergleich zu runden Rohren
- eine kürzere Baulänge des Wärmeübertragers wegen des besseren Wärmeübergangs
- eine kürzere Verweilzeit im Rohrwärmeübertrager wegen der kürzeren Baulänge und reduziertem Volumen
- eine geringere Materialschädigung aufgrund der kürzeren Verweilzeit bei hoher Temperatur und damit verbesserte Qualität des Endproduktes insbesondere von Polymeren (z.B. mechanische Eigenschaften, Farbzahl, Verarbeitbarkeit)
- ein niedrigerer Investitionsaufwand wegen der kompakteren Bauweise
- eine gleichmäßigere Verteilung bei hochviskosen Polymerlösung über den Rohrquerschnitt bzw. vollständige Füllung der Kompaktrohre im Vergleich zum in der Regel breiteren, bekannten Plattenverdampfer oder Plattenwärmeübertrager.

Es ist ein Anschluss an konventionelle Lochböden im Bereich der Zuleitungs- und der Entgasungskammer möglich durch den runden Querschnitt der Rohrenden. Außerdem ist mit einer solchen Vorrichtung ein einfaches scale up by numbering erreichbar.

Grundlagenuntersuchungen haben gezeigt, dass für eine schonende Entgasung von Polymerschmelzen eine möglichst niedrige Temperaturbelastung erforderlich ist, d.h. eine lange Verweilzeit bei niedriger Temperatur oder eine kurze Verweilzeit bei hoher Temperatur und gleichzeitig enger Verweilzeitverteilung. Aus Wirtschaftlichkeitsgründen ist Letzteres zu bevorzugen. Experimentelle Untersuchungen an der erfindungsgemäßen Verdampfervorrichtung führten zu dem Ergebnis, dass diese Anforderungen mit solchen Apparaten hervorragend erfüllt werden und dadurch erhebliche Einsparungen bei Anlageninvestitionen zu erwarten sind.

Anwendung findet das erfindungsgemäße Verfahren z.B. in zwei Bereichen:
- Verdampfungsprozesse von Flüchtigen bei chemischen Reaktionen:
- Abtrennung von Wasser oder anderen niedermolekularen Stoffen bei Polykondensationsreaktionen z.B. bei der Herstellung von Estern, Oligoestern, Polyestern oder Polyamiden
- Phenolabtrennung bei der Kondensation von Diphenylcarbonat mit aromatischen Bisphenolen zu Oligomeren oder Polymeren oder
- Reaktionen mit Bildung einer abtrennbaren Komponente mit hohem Dampfdruck (HCl-Abtrennung bei der Umsetzung von Phosgen mit Alkoholen zu Dialkylcarbonaten)
- Pyrolysereaktionen, bei denen unter Pyrolysebedingungen verdampfbare Wertprodukte entstehen, z.B. Rückspaltung von Polyestern in makrozyklische Mono- oder Dilactone
- Pyrolysereaktionen, bei denen unter Pyrolysebedingungen eine reaktive gasförmige Komponente vom Wertstoff entsteht und abgetrennt wird, z.B. Abtrennung von gasförmigem Alkohol vom als Kondensat anfallendem Isocyanat bei der Pyrolyse von Urethanen
- Verdampfungsprozesse ohne chemische Reaktion:
- Abtrennung von flüchtigen Monomeren (Diisocyanate) aus Lackharzen
- schonende Lösemittelentfernung aus Stoffgemischen mit temperaturempfindlichen Substanzen (insbesondere in der Feinchemie) und
- Lösemittel- und Monomerabtrennung aus Polymerlösungen, insbesondere von Chlorbenzol und/oder Methylenchlorid aus Polycarbonatschmelzen, Caprolactam aus Polyamidsehmelzen, Styrol, -Acrylnitril und Toluol oder Ethylbenzol aus SAN-Schmelzen bzw. ABS-Schmelzen, Cyclohexan aus h-Polystyrol-Schmelzen
- Abtrennung von flüchtigen Wertstoffen aus Gemischen, z.B. aus Destillationsrückständen
- Abtrennen von Ethanol aus alkoholischen Getränken

Die Erfindung wird nachstehend unter Verweis auf die Figuren anhand einer Ausführung beispielhaft näher erläutert.

Es zeigen:
- Figur 1:: die Seitenansicht eines Wärmetauscherrohres 8 mit variabler Rohrquerschnitt über der Länge
- Figur 2:: den Querschnitt des flachen Rohrstückes
- Figur 3:: den Aufbau des Rohrbündelwärmeübertragers
- Figur 4:: die schematische Gesamtansicht der erfindungsgemäßen Verdampfervorrichtung

Die Verdampfervorrichtung 1 hat folgenden Aufbau:

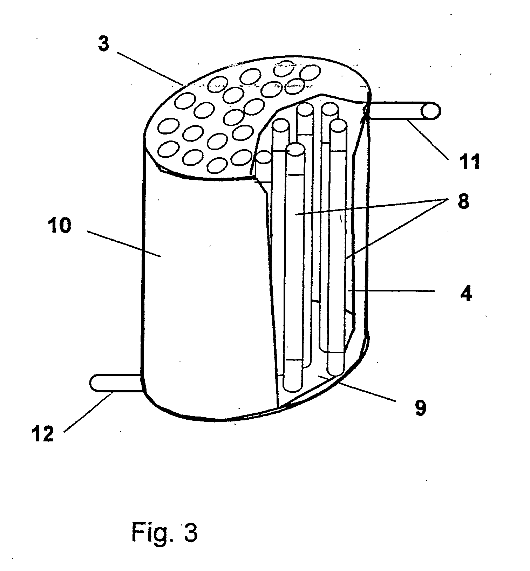

Die parallel zueinander angeordneten Wärmeaustauscherrohre 8 (siehe Fig. 3) befinden sich- in einem Wärmetauscherbehalten 4 bestehend aus einem Außenmantel 10 sowie zwei Lochböden 3,9, in denen die Rohre 8 so befestigt sind dass ein gasdichter Raum entsteht. Die Rohrenden schließen mit den Lochböden 3, 9 ab. Die Rohre 8 werden außen von einem Wärmeträgermedium im Gegenstrom zur Polymerlösung in den Rohren 8 umspült. Im mittleren Bereich haben die Rohre 8 (siehe Fig. 1) die in Fig. 2 vergrößert gezeigte nahezu rechteckige Querschnittsform. Die kurzen Seitenkanten der Rohre 8 sind aber abgerundet. Das Wärmeträgeröl fließt am Einlass 12 in die Kammer 4 ein und tritt am Auslass 11 wieder aus der Kammer 4 aus.

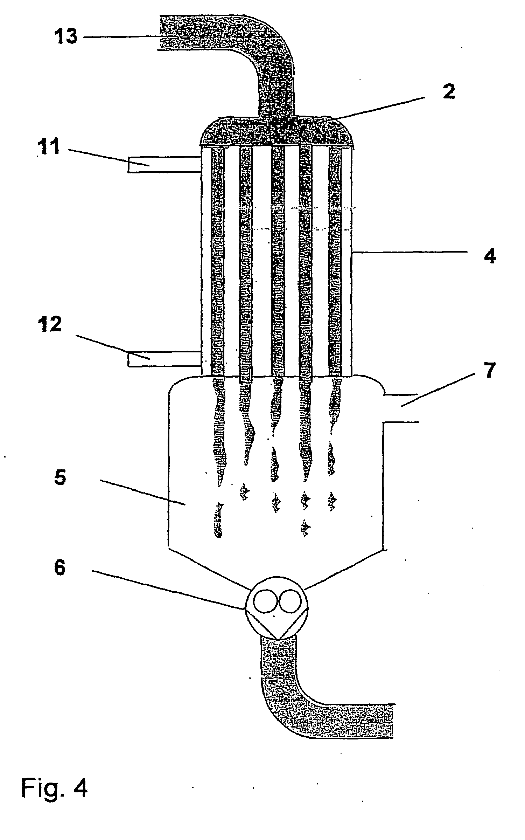

Figur 4 zeigt den gesamten Aufbau der Verdampfervorrichtung. Oberhalb des oberen Lochbodens 3 befindet sich die Zuleitungskammer 2 mit der Zuleitung 13 für das Polymer unterhalb des unteren Lochbodens 9 (gelochte Decke) ist die Entgasungskammer 5 mit der Austragspumpe 6 und deren Brüdenabzug 7 für die flüchtigen Bestandteile angebracht.

### Beispiel

### Entfernung flüchtiger Bestandteile aus einer Polymerlösung:

Eine vorgeheizte Polymerlösung bestehend aus etwa 80 % Masse-ABS und etwa 20 % Monomere oder Lösemittel (Acrylnitril, Styrol, Ethylbenzol und Methylethylketon) wird über die Zuleitungskammer 2 mit Lochboden 3 in einen Kompaktrohrwärmeübertrager mit vier Rohren 8 gefördert. Die Rohre haben eine Gesamtlänge von 1310 mm, wobei der flache Rohrbereich 1170 mm lang ist und im rechteckigen Bereich eine Spaltdicke D von 3 mm sowie eine Spaltbreite B von 12 mm besitzt (siehe Fig. 1). Das Rohr 8 wird mit Öl im Gegenstrom beheizt. Die Eintrittstemperatur der Polymerlösung in dem Wärmeaustauscher 4 beträgt 194,7°C. Die Polymerlösung fließt mit einem Polymerdurchsatz von 6 kg/h abwärts durch die mit 240°C beheizten Rohre 8 und verlässt das Rohr 8 mit einer Temperatur von 225,4°C. Uber der Rohrlänge stellt sich ein Druckverlust von 52,800 hPa ein. Die flüchtigen Substanzen werden im Entgasungsbehälter 5 bei 10 hPa von der Schmelze getrennt.

Vergleichende Versuche mit einem Verdampfer mit gleich langem, rundem Rohr (Durchmesser: 10 mm) zeigen, dass bei gleichem Durchsatz mit dem erfindungsgemäßen Rohrwärmeübertrager ein um den Faktor 1,8 besserer Wärmeübergang realisierbar ist. Außerdem konnte der Restgehalt an Lösemitteln mit dem Kompaktrohrwärmeübertrager um ca. 33 Gew.-% gesenkt werden.

## Patentansprüche

1. Verdampfervorrichtung (1) zur Behandlung viskoser Medien bestehend wenigstens aus einer Zuleitungskammer (2) mit Lochboden (3), einem daran angeschlossenen Rohrbündelwärmetauscher (4) mit parallel zueinander angeordneten Rohren (8), welcher durch den Lochboden (3) der Zuleitungskammer (2) und die Lochdecke (9) der Entgasungskammer begrenzt ist, einer an diesen anschließenden Entgasungskammer (5) mit einer Austragseinheit (6) für das Produkt, einer gelochten Decke (9) und einem Brüdenabzug (7) für die Entfernung flüchtiger Bestandteile, **dadurch gekennzeichnet, dass** die Rohre (8) des Wärmetauschers (4) auf dem größten Teil ihrer Längsausdehnung einen rechteckförmigen oder eliptischen Querschnitt aufweisen.

2. Verdampfervorrichtung nach Anspruch 1, **dadurch gekennzeichnet, dass** die Rohre (8) des Wärmetauschers (4) auf 80 bis 98% ihrer Längsausdehnung einen rechteckförmigen oder eliptischen Querschnitt aufweisen.

3. Verdampfervorrichtung nach Anspruch 1 oder 2, **dadurch gekennzeichnet, dass** die maximale Dicke D des Rohrinneren im Bereich des oder eliptischen rechteckfönnigen Querschnitts 1 bis 50 mm, bevorzugt 1 bis 20 mm beträgt.

4. Verdampfervorrichtung nach einem der Ansprüche 1 bis 3, **dadurch gekennzeichnet, dass** die maximale Breite B des Rohrinneren im Bereich des rechteckformigen oder eliptischen Querschnitts 5 bis 500 mm, bevorzugt 7 bis 100 mm, besonders bevorzugt 7 bis 50 mm beträgt.

5. Verdampfervorrichtung nach einem der Ansprüche 1 bis 4, **dadurch gekennzeichnet, dass** die Rohre (8) eine Länge von 100 mm bis 10 m, bevorzugt von 200 mm bis 3 m, besonders bevorzugt von 500 mm bis 1 m haben.

6. Verdampfervorrichtung nach einem der Ansprüche 1 bis 5, **dadurch gekennzeichnet, dass** die Rohre (8) eine Wandstärke von 0,5 bis 5 mm, bevorzugt von 1 bis 4 mm haben.

7. Verdampfervorrichtung nach einem der Ansprüche 1 bis 6, **dadurch gekennzeichnet, dass** die von Produkt berührten Teile der Vorrichtung, insbesondere die Rohre (8) aus einem eisenarmen Werkstoff insbesondere ausgewählt aus der Reihe Stahl, Nickellegierung, Aluminium oder Titan, insbesondere eisenarmer Stahl bestehen.

8. Vorrichtung nach einem der Ansprüche 1 bis 7, **dadurch gekennzeichnet, dass** an den Enden der Rohre (8) des Wärmetauschers (4) in der Entgasungskammer (5) vertikale Drähte, Ketten, Drahtschlaufen oder Drahtgeflechte angebracht sind.

9. Vorrichtung nach einem der Ansprüche 1 bis 8, **dadurch gekennzeichnet, dass** die Rohre (8) mehrere Zonen mit unterschiedlicher rechteckförmiger oder eliptischer Querschnittfläche aufweisen.

10. Verwendung einer Verdampfervorrichtung nach einem der Ansprüche 1 bis 9 zur Entfernung flüchtiger Bestandteile aus Polymerlösungen oder -schmelzen.

11. Verfahren zur Verdampfung flüchtiger Bestandteile aus Polymerlösungen oder -schmelzen unter Verwendung einer Verdampfervorrichtung nach einem der Ansprüche 1 bis 9, mit den Schritten Vorerhitzen des Polymeren auf eine Temperatur von 150 bis 250°C, bevorzugt von 160 bis 240°C, Einleiten des Polymeren in die Zuleitungskammer (2) bei einem Druck von 2000 bis 100000 hPa, bevorzugt von 5000 bis 50000 hPa, Durchleiten des Polymeren durch das Rohrbündel des Wärmetauschers (4) unter Beheizung der Rohre (8), bevorzugt mit einem Wärmetauschermedium im Gegenstrom zum Polymeren auf eine Temperatur von 160 bis 380°C, bevorzugt von 165 bis 300°C und Verdampfen und Entfernen der flüchtigen Verbindungen im Bereich der Entgasungskammer (5) und ggf. zusätzlich im unteren Abschnitt der Rohre (8) bei einem Druck in der Entgasungskammer (5) von 1 bis 5000 hPa, bevorzugt von 2 bis 2500 hPa, besonders bevorzugt von 5 bis 1000 hPa sowie Sammeln und Austragen des Polymeren.

12. Verfahren nach Anspruch 11, **dadurch gekennzeichnet, dass** das Verdampfen und Entfernen der flüchtigen Verbindungen zusätzlich im unteren Viertel, insbesondere im unteren Achtel der Rohre (8) erfolgt.

13. Verfahren nach Anspruch 11 oder 12, **dadurch gekennzeichnet, dass** das Polymer ausgewählt ist aus der Reihe: Polycarbonat, Polyamid, Polypropylen, Polyethylen, Polyester, Polystyrol, hydriertes Polystyrol, Polyurethan, Polyacrylat, Polymethylmethacrylat, Styrol-Acrylnitril, Harz, Poly(Acrylnitril-Butadien-Styrol) und ihre Copolymere oder gegebenenfalls Mischungen der Polymere.

14. Verfahren nach einem der Ansprüche 11 bis 13, **dadurch gekennzeichnet, dass** die flüchtigen Verbindungen Lösemittel bzw. Monomere oder niedermolekulare Oligomere der eingesetzten Polymere, vorzugsweise Chlorbenzol, Methylenchlorid, Bisphenol-A, Caprolactam, Styrol, Acrylnitril, Toluol, Ethylbenzol und Cyclohexan sind.

15. Verfahren nach einem der Ansprüche 11 bis 14, **dadurch gekennzeichnet, dass** die Viskosität des Polymermaterials bei Eintritt in die Zuleitungskammer (2) 100 mPa·s bis 10⁷ Pa.s, bevorzugt 500 mPa·s bis 10⁶ Pa·s, besonders bevorzugt 1 Pa·s bis 10⁵ Pa·s beträgt.

16. Verfahren nach einem der Ansprüche 11 bis 15, **dadurch gekennzeichnet, dass** der Durchsatz an Polymermaterial bezogen auf ein einzelnes Rohr (8) 0,5 bis 12 kg/h, bevorzugt 1 bis 9 kg/h beträgt.

## Claims

1. An evaporator apparatus (1) for the treatment of viscous media consisting at least of a feed chamber (2) with a perforated plate (3), a tube-bundle heat exchanger (4) connected thereto having tubes (8) arranged parallel to one another, which is delimited by the perforated plate (3) of the feed chamber (2) and the perforated cover (9) of the devolatilisation chamber, a devolatilisation chamber (5) connected to this having a discharge unit (6) for the product, a perforated cover (9) and a vapour take-off (7) for removing volatile components, **characterised in that** the tubes (8) of the heat exchanger (4) have a rectangular or elliptical cross section over the greater part of their longitudinal dimension.

2. The evaporator apparatus according to claim 1, **characterised in that** the tubes (8) of the heat exchanger (4) have a rectangular or elliptical cross section over 80 to 98% of their longitudinal dimension.

3. The evaporator apparatus according to claim 1 or 2, **characterised in that** the maximum depth D of the tube interior in the region of the elliptical or rectangular cross section is 1 to 50 mm and preferably 1 to 20 mm.

4. The evaporator apparatus according to one of claims 1 to 3, **characterised in that** the maximum breadth B of the tube interior in the region of the rectangular or elliptical cross section is 5 to 500 mm, preferably 7 to 100 mm and particularly preferably 7 to 50 mm.

5. The evaporator apparatus according to one of claims 1 to 4, **characterised in that** the tubes (8) have a length of 100 mm to 10 m, preferably of 200 mm to 3 m and particularly preferably of 500 mm to 1 m.

6. The evaporator apparatus according to one of claims 1 to 5, **characterised in that** the tubes (8) have a wall thickness of 0.5 to 5 mm, and preferably of 1 to 4 mm.

7. The evaporator apparatus according to one of claims 1 to 6, **characterised in that** the parts of the apparatus in contact with product, particularly the tubes (8), are composed of a low-iron material, particularly one selected from the series of steel, nickel alloy, aluminium or titanium, particularly low-iron steel.

8. The apparatus according to one of claims 1 to 7, **characterised in that** vertical wires, chains, wire loops or wire braids are attached to the ends of the tubes (8) of the heat exchanger (4) in the devolatilisation chamber (5).

9. The apparatus according to one of claims 1 to 8, **characterised in that** the tubes (8) comprise a plurality of zones of different rectangular or elliptical cross-sectional areas.

10. The use of an evaporator apparatus according to one of claims 1 to 9 for the removal of volatile components from polymer solutions or melts.

11. A method of evaporating volatile components from polymer solutions or melts using an evaporator apparatus according to one of claims 1 to 9 with the steps of preheating the polymer to a temperature of 150 to 250°C, preferably of 160 to 240°C, introducing the polymer into the feed chamber (2) under a pressure of 2000 to 100000 hPa, preferably of 5000 to 50000 hPa, passing the polymer through the bundle of tubes in the heat exchanger (4) while heating the tubes (8), preferably with a heat exchange medium in counter-current to the polymer to a temperature of 160 to 380°C, preferably of 165 to 300°C, and evaporating and removing the volatile compounds in the region of the devolatilisation chamber (5) and optionally also in the lower section of the tubes (8) under a pressure in the devolatilisation chamber (5) of 1 to 5000 hPa, preferably of 2 to 2500 hPa and particularly preferably of 5 to 1000 hPa, and collecting and discharging the polymer.

12. The method according to claim 11, **characterised in that** the evaporation and removal of the volatile compounds additionally takes place in the bottom quarter and particularly in the bottom eighth of the tubes (8).

13. The method according to claim 11 or 12, **characterised in that** the polymer is selected from the series consisting of polycarbonate, polyamide, polypropylene, polyethylene, polyester, polystyrene, hydrogenated polystyrene, polyurethane, polyacrylate, polymethyl methacrylate, styrene/acrylonitrile, resin, poly(acrylonitrile/butadiene/styrene) and copolymers thereof or optionally mixtures of said polymers.

14. The method according to one of claims 11 to 13, **characterised in that** the volatile compounds are solvents or monomers or low molecular weight oligomers of the polymers used, preferably chlorobenzene, methylene chloride, bisphenol A, caprolactam, styrene, acrylonitrile, toluene, ethylbenzene and cyclohexane.

15. The method according to one of claims 11 to 14, **characterised in that** the viscosity of the polymer material on entering the feed chamber (2) is 100 mPa·s to 10⁷ Pa·s, preferably 500 mPa·s to 10⁶ Pa·s and particularly preferably 1 Pa·s to 10⁵ Pa·s.

16. The method according to one of claims 11 to 15, **characterised in that** the throughput of polymer material, based on an individual tube (8), is 0.5 to 12 kg/h and preferably 1 to 9 kg/h.

## Revendications

1. Dispositif évaporateur (1) pour le traitement de milieux visqueux consistant au moins en une chambre d'alimentation (2) avec fond perforé (3), un échangeur de chaleur à faisceau tubulaire (4) y raccordé avec tubes (8) agencés parallèlement les uns aux autres, qui est limité par le fond perforé (3) de la chambre d'alimentation (2) et le couvercle perforé (9) de la chambre de dégazage, une chambre de dégazage (5) suivant celui-ci, avec une unité de décharge (6) pour le produit, un couvercle perforé (9) et un conduit d'évacuation des fumées (7) pour éliminer les constituants volatils, **caractérisé en ce que** les tubes (8) de l'échangeur de chaleur (4) présentent sur la plus grande partie de leur longueur, une coupe transversale rectangulaire ou elliptique.

2. Dispositif évaporateur selon la revendication 1, **caractérisé en ce que** les tubes (8) de l'échangeur de chaleur (4) présentent sur 80 à 98% de leur longueur, une coupe transversale rectangulaire ou elliptique.

3. Dispositif évaporateur selon la revendication 1 ou 2, **caractérisé en ce que** l'épaisseur D maximale de l'intérieur des tubes se situe dans l'intervalle allant de 1 à 50 mm, de préférence de 1 à 20 mm au niveau de la coupe transversale rectangulaire ou elliptique.

4. Dispositif évaporateur selon l'une des revendications 1 à 3, **caractérisé en ce que** la largeur B maximale de l'intérieur du tube au niveau de la coupe transversale rectangulaire ou elliptique se situe dans l'intervalle allant de 5 à 500 mm, de préférence de 7 à 100 mm, de manière particulièrement préférée, de 7 à 50 mm.

5. Dispositif évaporateur selon l'une des revendications 1 à 4, **caractérisé en ce que** les tubes (8) ont une longueur allant de 100 mm à 10 m, de préférence de 200 mm à 3 m, de manière particulièrement préférée de 500 mm à 1 m.

6. Dispositif évaporateur selon l'une des revendications 1 à 5, **caractérisé en ce que** les tubes (8) ont une épaisseur de paroi allant de 0,5 à 5 mm, de préférence de 1 à 4 mm.

7. Dispositif évaporateur selon l'une des revendications 1 à 6, **caractérisé en ce que** les parties en contact avec le produit, du dispositif, en particulier les tubes (8), consistent en un matériau pauvre en fer, en particulier choisi parmi l'acier, les alliages de nickel, l'aluminium ou le titane, en particulier un acier pauvre en fer.

8. Dispositif selon l'une des revendications 1 à 7, **caractérisé en ce que** sur les extrémités du tubes (8) de l'échangeur de chaleur (4) dans la chambre de dégazage (5), sont agencés des fils métalliques, des chaînes, des boucles de fil ou des grillages métalliques verticaux.

9. Dispositif selon l'une des revendications 1 à 8, **caractérisé en ce que** les tubes (8) présentent plusieurs zones de section transversale rectangulaire ou elliptique différente.

10. Utilisation d'un dispositif évaporateur selon l'une des revendications 1 à 9, pour éliminer les constituants volatils de solutions ou masses fondues de polymères.

11. Procédé pour évaporer les constituants volatils de solutions ou masses fondues de polymères en utilisant un dispositif évaporateur selon l'une des revendications 1 à 9, comprenant les étapes de préchauffage du polymère à une température allant de 150 à 250°C, de préférence de 160 à 240°C, introduction du polymère dans la chambre d'alimentation (2) à une pression allant de 2000 à 100 000 hPa, de préférence de 5000 à 50 000 hPa, passage du polymère dans le faisceau tubulaire de l'échangeur de chaleur (4) avec chauffage des tubes (8), de préférence avec un milieu d'échange de chaleur allant à contre-courant du polymère, à une température allant de 160 à 380°C, de préférence de 165 à 300°C, et évaporation et élimination des composés volatils au niveau de la chambre de dégazage (5) et le cas échéant, en outre dans une section inférieure des tubes (8), à une pression dans la chambre de dégazage (5) située dans l'intervalle allant de 1 à 5000 hPa, de préférence de 2 à 2500 hPa, de manière particulièrement préférée de 5 à 1000 hPa, ainsi que rassemblement et décharge du polymère.

12. Procédé selon la revendication 11, **caractérisé en ce que** l'évaporation et l'élimination des constituants volatils sont réalisées en outre, dans le quart inférieur, en particulier dans le huitième inférieur des tubes (8).

13. Procédé selon la revendication 11 ou 12, **caractérisé en ce que** le polymère est choisi parmi la série : polycarbonate, polyamide, polypropylène, polyéthylène, polyester, polystyrène, polystyrène hydrogéné, polyuréthanne, polyacrylate, poly(méthacrylate de méthyle), résine styrène-acrylonitrile, poly(acrylonitrile-butadiène-styrène) et leurs copolymères ou le cas échéant, des mélanges des polymères.

14. Procédé selon l'une des revendications 11 à 13, **caractérisé en ce que** les composés volatils sont le solvant ou des monomères et respectivement, oligomères de faible poids moléculaire du polymère mis en oeuvre, de préférence le chlorobenzène, le chlorure de méthylène, le bisphénol-A, le caprolactame, le styrène, l'acrylonitrile, le toluène, l'éthylbenzène et le cyclohexane.

15. Procédé selon l'une des revendications 11 à 14, **caractérisé en ce que** la viscosité du matériau polymère à l'entrée de la chambre d'alimentation (2) se situe dans l'intervalle allant de 100 mPa.s à 10⁷ Pa.s, de préférence de 500 mPa.s à 10⁶ Pa.s, de manière particulièrement préférée de 1 Pa.s à 10⁵ Pa.s.

16. Procédé selon l'une des revendications 11 à 15, **caractérisé en ce que** le débit en matériau polymère se situe dans l'intervalle allant de 0,5 à 12 kg/heure, de préférence de 1 à 9 kg/heure par rapport à un tube (8) individuel.
